# EUROPÄISCHE PATENTSCHRIFT

(11) **EP 0 496 193 B1**
(45) Veröffentlichungstag und Bekanntmachung des Hinweises auf die Patenterteilung: **13.05.1998**
(21) Anmeldenummer: 92100051.9
(22) Anmeldetag: 03.01.1992
(51) Int. Cl.: C08F 30/04, C08F 4/642, C08F 10/00, C07F 17/00

(54) **Metallocen(co)polymere, Verfahren zu ihrer Herstellung und ihre Verwendung als Katalysatoren; Metallocene hierfür.**
Metallocen(co)polymers, process for preparation and their use as catalysts; metallocenes therefor.
(Co)polymères de métallocène, procédé pour les préparer et utilisation en tant que catalyseur; métallocènes à cette fin.

(30) Priorität: 12.01.1991 DE 4100761
(43) Veröffentlichungstag der Anmeldung: 29.07.1992
(73) Patentinhaber: TARGOR GmbH, 55116 Mainz (DE)
(72) Erfinder: Antberg, Martin, Dr., W-6238 Hofheim am Taunus (DE); Herrmann, Hans-Friedrich, Dr., W-6100 Darmstadt (DE); Rohrmann, Jürgen Dr., W-6233 Kelkheim (Taunus) (DE)

(56) Entgegenhaltungen:
- US-A- 4 613 670
- PURE AND APPLIED CHEMISTRY, Band 58, Nr. 4, 1986, Seiten 617-622; C.U. PITTMAN, Jr. et al.: "Organometallic polymers"
- C.R.Acad.Sci.Paris, Band 284, Seiten 323-325

## Beschreibung

Die vorliegende Erfindung betrifft in erster Linie ein Verfahren zur Herstellung einer immobilen (heterogenen) Metallocenkatalysatorkomponente durch Homopolymerisation von vinylgruppenfunktionalisierten Metallocenen oder durch Copolymerisation solcher Metallocene mit (Di-)Vinylaromaten. Die so hergestellten Polymere besitzen vorteilhafte Eigenschaften als Katalysatoren bei der Olefinpolymerisation.

Metallocene von Übergangsmetallen sind als Katalysatorkomponenten bekannt (vgl. US 4 522 982, US 4 542 199, EP-A 128045). Zusammen mit Aluminoxanen bilden sie homogene Übergangsmetall-Katalysatoren, welche in aromatischen und aliphatischen Kohlenwasserstoffen löslich sind. Diese Katalysatoren sind sehr aktiv. Metallocene bilden auch mit Salzen nichtkoordinierender Anionen ein aktives System zur Olefinpolymerisation (vgl. EP-A 277 003/4).

Lösliche Katalysatoren sind jedoch nachteilig, wenn sie in bestehenden technischen Anlagen eingesetzt werden sollen, da diese in der Regel für die Verwendung von heterogenen Katalysatorsystemen eingerichtet sind.

Bekannt sind Metallocen-Katalysatoren, bei welchen eine Zirkonocen- oder Titanocenkomponente und ein Aluminoxan gemeinsam aus einer Lösung auf einen silikatischen Träger aufgebracht werden (vgl. EP-A 206 794). Dieses Katalysatorsystem ist indessen wenig aktiv. Außerdem sind die Katalysatorkomponenten nicht ausreichend fest auf dem Träger verankert und können somit während der Polymerisation extrahiert werden.

Außerdem ist bekannt, daß Silyletherreste enthaltende Metallocenverbindungen unter Bildung von Siloxanbrücken auf silikatische Träger aufgebracht werden können (vgl. EP-A 293 815). Dafür ist es notwendig, dem Trägermaterial durch mehrstündiges Trocknen bei einer Temperatur von maximal 800 °C adsorptiv gebundenes Wasser zu entziehen.

Bekannt ist auch, daß ein heterogener Metallocenkatalysator erhalten wird, wenn man eine olefingruppenhaltige Metallocenverbindung unter Hydrosilylierungskatalyse mit einem Poly(methylhydrogensiloxan) umsetzt (vgl. DE-OS 38 40 772).

Diese Polymerisationskontakte zeichnen sich, insbesondere im Vergleich mit ihren noch löslichen Vorstufen, durch nur mäßige Polymerisationsaktivität aus.

In Pure and Appl. Chem., Vol. 58(1986) 617-622 wird die Copolymerisation von (Cp-Vinyl) CpTiCl₂ (Cp = Cyclopentadienyl) u.a. mit Vinylbenzol beschrieben. Ein Hinweis auf eine mögliche Verwendung des Reaktionsproduktes als Katalysator findet sich nicht. Versuche haben gezeigt, daß solche Copolymere auf Titanocenbasis nur eine geringe Polymerisationsaktivität aufweisen.

Es bestand somit die Aufgabe, ein Katalysatorsystem zu finden, das in gängigen - auch aromatischen - Lösemitteln nicht löslich ist, aber dennoch eine hohe Polymerisationsaktivität besitzt.

Es wurde gefunden, daß die obengenannten Nachteile vermieden werden können, wenn man ein vinylgruppenfunktionalisiertes Zirkonocen oder Hafnocen, gegebenenfalls zusammen mit einem (Di-)Vinylaromat, polymerisiert und das erhaltene Polymer als Polymerisationskontakt verwendet.

Dier vorliegende Erfindung betrifft somit ein
Verfahren zur Herstellung einer immobilen Metallocenkatalysatorkomponente, dadurch gekennzeichnet, daß man ein Metallocen der Formel I 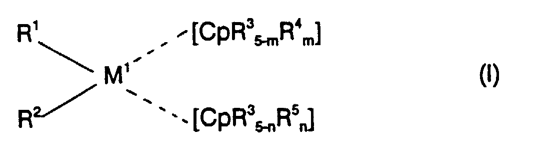 und/oder der Formel II 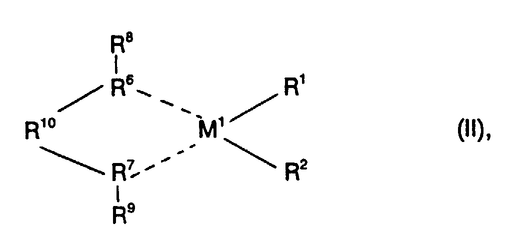 worin
- M¹: Zirkonium oder Hafnium ist und
- Cp: einen Cyclopentadienylrest bedeutet,
- R¹ und R²: gleich oder verschieden sind und ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe oder eine C₆-C₁₀-Aryloxygruppe bedeuten,
R¹ und R² auch miteinander verknüpft sein können und mit M¹ einen Metallocyclus bilden können,
- die Reste R³: gleich oder verschieden sind und ein Wasserstoffatom, ein Halogenatom, eine C₁-C₁₀-Alkylgruppe, eine C₆-C₁₀-Arylgruppe, eine C₇-C₂₀-Arylalkylgruppe, eine C₁-C₁₀-Fluoralkylgruppe oder einen Organometallrest wie C₁-C₁₀-Trialkylsilyl, C₆-C₁₀-Aryl-C₁-C₁₀-dialkylsilyl, C₁-C₁₀-Alkyl-C₆-C₁₀-diarylsilyl oder C₆-C₁₀-Triarylsilyl bedeuten,
- R⁴ und R⁵: gleich oder verschieden sind und eine Vinylgruppe, eine C₆-C₁₈-Arylvinylgruppe, eine C₁-C₈-Alkylvinylgruppe oder eine C₆-C₁₈-Vinylarylgruppe, die alle substituiert sein können, bedeuten,
- R⁶ und R⁷: gleich oder verschieden sind und einen Cyclopentadienyl-, Indenyl- oder Fluorenylrest bedeuten, wobei die genannten Ringe mit M¹ eine Sandwichstruktur bilden können,
- R⁸ und R⁹: gleich oder verschieden sind, Substituenten von R⁶ und R⁷ sind und die für R³, R⁴ und R⁵ genannten Bedeutungen besitzen, mit der Maßgabe, daß R⁶ und R⁷ ein- oder mehrfach durch R⁸ oder R⁹ substituiert sein können, aber mindestens ein Ring R⁶ oder R⁷ mindestens einen Rest R⁸ oder R⁹ in der Bedeutung von R⁴ und R⁵ tragen muß,
- R¹⁰: die in den Formeln III-VII dargestellte Bedeutung hat 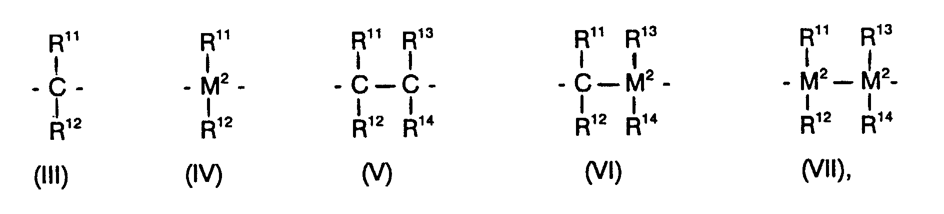 wobei
M² Silizium, Germanium oder Zinn ist und
R¹¹, R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₆-C₁₀-Aryloxygruppe oder eine C₇-C₂₀-Arylalkylgruppe bedeuten,
R¹¹ und R¹², R¹³ und R¹⁴, R¹¹ und R¹³ oder R¹² und R¹⁴ mit den sie verbindenden Atomen ein Ringsystem ausbilden können, und
m und n gleich oder verschieden sind und eine Zahl von 0 bis 5 bedeuten, wobei m+n ≥ 1 sein muß,
homo- oder copolymerisiert oder eine Verbindung der Formel I und/oder der Formel II mit einem (Di-)Vinylaromaten copolymerisiert.

Die nach dem erfindungsgemäßen Verfahren hergestellten immobilen Metallocenkatalysatorkomponenten sind neu und ebenfalls Gegenstand dieser Erfindung.

Erfindungsgemäße Metallocenkatalysatorkomponente bedeutet somit:
a) Homopolymere der Verbindungen I und II
b) Copolymere aus einer (mehreren) Verbindung(en) I und einer (mehreren) Verbindung(en) II
c) Copolymere aus einer (mehreren) Verbindung(en) I und einem (mehreren) (Di-)Vinylaromaten
d) Copolymere aus einer (mehreren) Verbindung(en) II und einem (mehreren) (Di-)Vinylaromaten und
e) Copolymere aus einer (mehreren) Verbindung(en) I und II und einem (mehreren) (Di-)Vinylaromaten.

In den Formeln I und II gilt bevorzugt, daß
- R¹ und R²: gleich oder verschieden sind und ein Wasserstoffatom, ein Halogenatom, eine C₁-C₄-Alkylgruppe, eine C₁-C₄-Alkoxygruppe, eine C₇-C₁₄-Arylalkylgruppe, eine C₆-C₁₀-Arylgruppe oder eine C₆-C₁₀-Aryloxygruppe bedeuten,
R¹ und R² auch miteinander verknüpft sein können und mit M¹ einen Metallocyclus bilden können,
- die Reste R³: gleich oder verschieden sind und ein Wasserstoffatom, ein Halogenatom, eine C₁-C₄-Alkylgruppe, eine C₆-C₁₀-Arylgruppe, eine C₇-C₁₄-Arylalkylgruppe, eine C₁-C₆-Fluoralkylgruppe oder einen Organometallrest wie C₁-C₁₀-Trialkylsilyl, C₆-C₁₀-Aryl-C₁-C₆-dialkylsilyl, C₁-C₄-Alkyl-C₆-C₁₀-diarylsilyl oder C₆-C₁₀-Triarylsilyl bedeuten,
- R⁴ und R⁵: gleich oder verschieden, vorzugsweise gleich, sind und eine Vinylgruppe, eine C₆-C₁₈-Arylvinylgruppe, eine C₁-C₈-Alkylvinylgruppe oder eine C₆-C₁₈-Vinylarylgruppe, die durch eine C₁-C₄-Alkoxygruppe, C₁-C₄-Alkylgruppe oder OH-Gruppe substituiert sein können, bedeuten,
- R⁸ und R⁷: gleich oder verschieden sind und einen Cyclopentadienyl-, Indenyl- oder Fluorenylrest bedeuten, wobei die genannten Ringe mit M¹ eine Sandwichstruktur bilden können,
- R⁸ und R⁹: gleich oder verschieden sind, Substituenten von R⁶ und R⁷ sind und die für R³, R⁴ und R⁵ genannten Bedeutungen besitzen, mit der Maßgabe, daß R⁶ und R⁷ ein- oder mehrfach durch R⁸ oder R⁹ substituiert sein können, aber mindestens ein Ring R⁶ oder R⁷ mindestens einen Rest R⁸ oder R⁹ in der Bedeutung von R⁴ und R⁵ tragen muß,
- R¹⁰: die in den Formeln III-VII dargestellte Bedeutung hat, wobei M² Silizium oder Germanium ist und R¹¹, R¹², R¹³ und R¹⁴ gleich oder verschieden sind und ein Wasserstoffatom, ein Halogenatom, eine C₁-C₆-Alkylgruppe, eine C₁-C₆-Fluoralkylgruppe, eine C₆-C₁₀-Arylgruppe, eine C₆-C₁₀-Fluorarylgruppe, eine C₁-C₆-Alkoxygruppe, eine C₆-C₁₀-Aryloxygruppe oder eine C₇-C₁₄-Arylalkylgruppe bedeuten, R¹¹ und R¹², R¹³ und R¹⁴, R¹¹ und R¹³ oder R¹² und R¹⁴ mit den sie verbindenden Atomen ein Ringsystem ausbilden können, und m und n gleich oder verschieden sind und eine Zahl von 0 bis 5 bedeuten, wobei m+n ≥ 1 sein muß.

Insbesondere gilt, daß
- R¹ und R²: gleich oder verschieden sind und ein Wasserstoffatom, ein Halogenatom, eine C₁-C₄-Alkylgruppe oder eine C₆-C₁₀-Arylgruppe bedeuten,
R¹ und R² auch miteinander verknüpft sein können und mit M¹ einen Metallocyclus bilden können,
- die Reste R³: gleich oder verschieden sind und ein Wasserstoffatom, ein Halogenatom, eine C₁-C₄-Alkylgruppe, eine C₆-C₁₀-Arylgruppe oder einen Organometallrest wie C₁-C₁₀-Trialkylsilyl bedeuten,
- R⁶ und R⁷: einen Cyclopentadienylrest bedeuten und
- R¹⁰: die in den Formeln II-V dargestellte Bedeutung hat, wobei
M² Silizium ist und R¹¹, R¹², R¹³ und R¹⁴ gleich oder verschieden sind und ein Wasserstoffatom, ein Halogenatom, eine C₁-C₆-Alkylgruppe oder eine C₆-C₁₀-Arylgruppe bedeuten,
R¹¹ und R¹², R¹³ und R¹⁴, R¹¹ und R¹³ oder R¹² und R¹⁴ mit den sie verbindenden Atomen ein Ringsystem ausbilden können.

Dabei steht R¹⁰ vorzugsweise für eine Dialkylsilyl- oder eine 1,2-Alkandiylgruppe, insbesondere für eine Dimethylsilylgruppe oder 1,2-Ethandiylgruppe.

R¹¹ und R¹² oder R¹³ und R¹⁴ können unter Bildung spirocyclischer Systeme wie 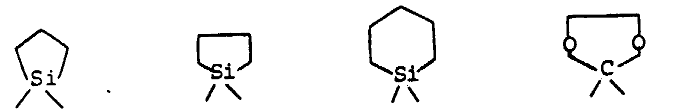 miteinander verknüpft sein, ebenso wie R¹¹ und R¹³ oder R¹² und R¹⁴ folgendes Ringsystem 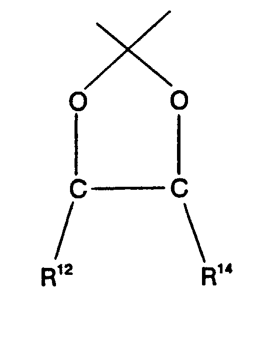 ausbilden können.

Beispiele für geeignete Metallocene der Formel I sind:

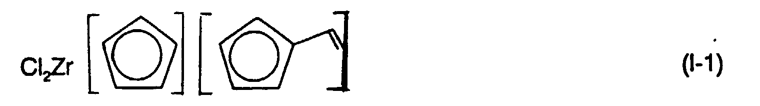

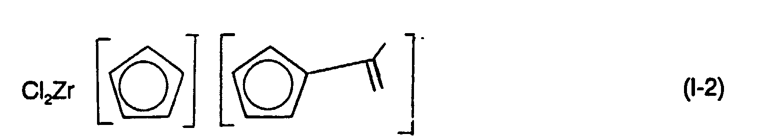

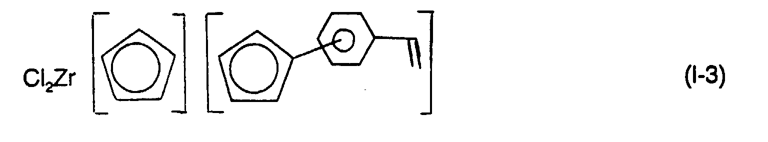

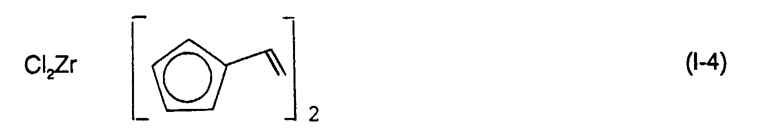

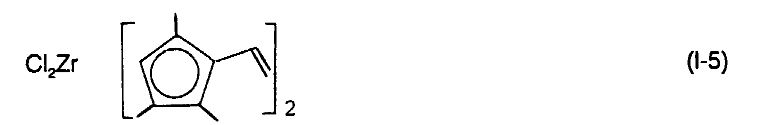

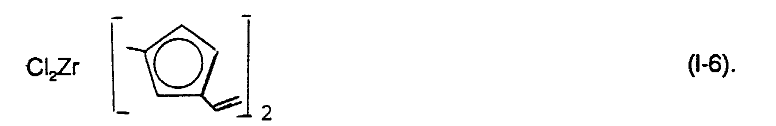

Beispiele für Formel II sind:

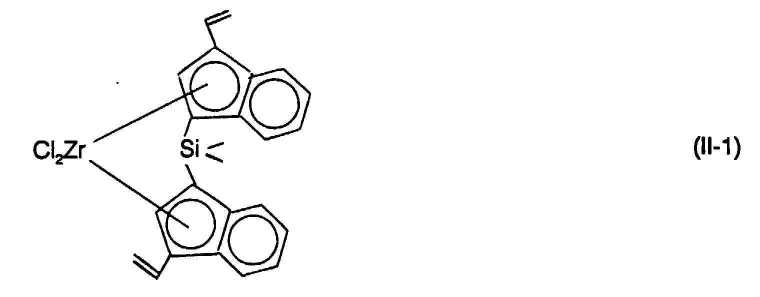

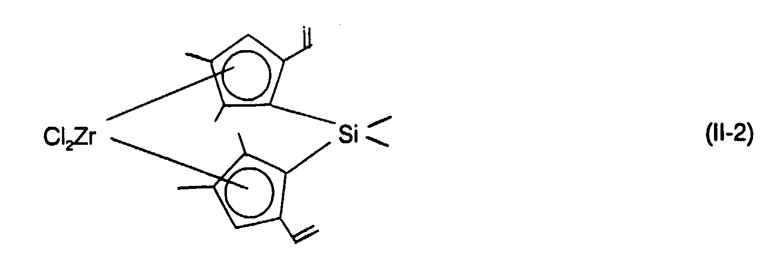

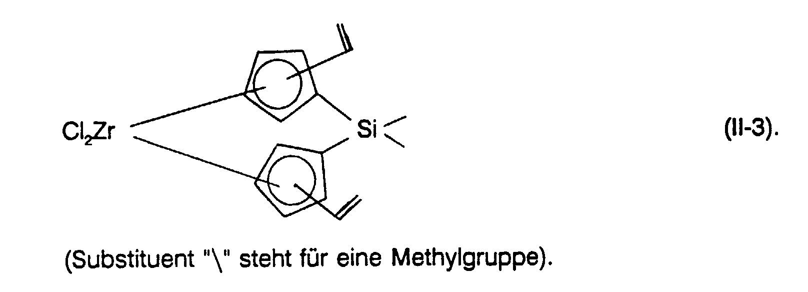

Die Herstellungsverfahren für die beschriebenen Metallocene sind prinzipiell bekannt; vgl. Journal of Organometallic Chem. 288 (1985) 63-67, EP-A 320 762 und die Ausführungsbeispiele.

Metallocen der Formel I oder der Formel II gemäß Anspruch 9 sind ebenfalls Gegenstand dieser Erfindung. In C. R. Acad. Sci. Paris, Band 284, Seiten 323-325 sind Bis(cyclopentadienyl)-Metallocene beschrieben, die einem Cyclopentadienylliganden eine Phenylvinylgruppe tragen.

Beispiele für erfindungsgemäß zur Copolymerisation zu verwendende (Di-)Vinylaromaten sind: 4-Vinylanisol, 9-Vinylanthracen, 4-Ethoxystyrol, Vinylmesitylen, (2-, 3- oder 4-)Vinyltoluol, Styrol, 4-Vinylbiphenyl, 4-Vinylveratrol, 2-Vinylnaphthalin und Divinylbenzol, insbesondere Styrol (Vinylbenzol), oder deren Gemische. Falls bei der Polymerisation eine Quervernetzung erwünscht ist, wird bevorzugt Divinylbenzol eingesetzt. Diese Substanzen sind im Handel erhältlich.

Werden die Metallocenverbindungen I und/oder II mit Vinylbenzol und Divinylbenzol polymerisiert, so enthalten sie mindestens eine Vinylgruppe. Wenn die Verbindungen I und/oder II mit Vinylbenzol aber ohne Divinylbenzol copolymerisiert werden, dann müssen sie mindestens 2 Vinylgruppen aufweisen.

Die (Co-)Polymerisation kann sowohl thermisch (ohne Radikalstarter) als auch (bevorzugt) radikalisch katalytisch erfolgen. Im letzteren Fall werden dem Reaktionsgemisch Radikalbildner in katalytisch wirksamen Mengen zugesetzt. Die Eignung einer Substanz als Katalysator (Radikalbildner) für das erfindungsgemäße Verfahren ergibt sich insbesondere aus ihrer Halbwertszeit bei gegebener Temperatur. Bevorzugt wird α,α'-Azo-isobutyronitril verwendet. Aber auch aus der Substanzklasse der organischen Peroxide sind zahlreiche Verbindungen für den genannten Zweck geeignet.
Beispiele hierfür sind: tert.Butylperbenzoat, 2,2-Bis-(butylperoxy-)butan, di-tert.-Butyl-diperphthalat, tert.-Butylperisononanat, tert.-Butylperacetat, 2,5-Dimethylhexan-2,5-diperbenzoat, 3,5,5-Trimethylcyclohexanonperketal, Mono-tert.-Butylpermaleinat, tert.-Butylperisobutyrat, p-Chlorbenzoylperoxid, tert.-Butylperoctoat, Benzoylperoxid, Diacetylperoxid, Succinylperoxid, Propionylperoxid, Capryloylperoxid, Lauroylperoxid, Decanoylperoxid, Isononanoylperoxid, tert.-Butylperpivalat oder 2,4-Dichlorbenzoylperoxid.

Zur Polymerisation werden die Raktionsteilnehmer in einen Kohlenwasserstoff, vorzugsweise in einen aromatischen Kohlenwasserstoff, im besonderen Toluol oder Xylol, gegeben und 1 bis 24 h, vorzugsweise 4 bis 10 h, auf 60-140 °C, vorzugsweise 80-90 °C, erwärmt und während der Reaktion 1 bis 4 mal mit 0,1 g Portionen von α,α'-Azo-isobutyronitril versetzt. Vom erhaltenen, in aromatischen Lösemitteln aufgequollenen Polymer wird abdekantiert, mit dem verwendeten Lösemittel gewaschen und dann im Vakuum getrocknet. Der Rückstand wird mehrmals mit gesättigtem Kohlenwasserstoff, vorzugsweise n-Hexan oder n-Pentan, gewaschen und im Vakumm getrocknet.

Die Vinylmetallocene der Formeln I oder II können auch leicht thermisch (ohne Radikalstarter) homopolymerisiert werden. Dies kann in einem hochsiedenden, inerten Lösemittel, wie n-Octan oder Xylol, oder auch vorzugsweise ohne Lösemittel geschehen. Dabei entsteht ein Feststoff, der in Kohlenwasserstoffen nicht löslich ist.

Die erfindungsgemäßen Homo- oder Copolymere können vorteilhaft als Katalysatoren zur Polymerisation von 1-Olefinen der Formel

R¹⁵ - CH = CH₂ ,

worin R¹⁵ Wasserstoff oder eine geradkettige oder verzweigte Alkylgruppe, beispielsweise Ethylen, Propylen oder 4-Methylpenten(1), bedeutet, verwendet werden.

Außerdem kann der Kontakt auch zur Polymerisation von cyclischen Olefinen, wie Cyclopenten, Cyclohexen, Norbornen, Diolefinen und cyclischen Diolefinen eingesetzt werden.

Auch können mehrere Olefine der obengenannten Formel oder Cycloolefine miteinander copolymerisiert werden.

Zur Herstellung von Polyolefinen wird bevorzugt ein Katalysatorsystem verwendet, das neben dem erfindungsgemäßen Metallocenpolymer aus einem Aluminoxan als Cokatalysator besteht. Die Herstellung und der Einsatz solcher Aluminoxane sind bekannt (S. Pasynkiewicz, Polyhedron 9 (1990) 429 und EP-A 302 424).

Es ist auch möglich, daß man an Stelle (oder neben) eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt des Metallocenpolymers mit einer der genannten Verbindungen (vgl. EP-A 277 004).

Ferner kann man auch das oben beschriebene Metallocenpolymer mit einem Alkylierungsmittel wie Grignard- oder Lithiumverbindung, besonders Li-Aluminalkyle, insbesondere Methyllithium, umsetzen. Diese Umsetzung entfällt natürlich bei bereits entsprechend substituierten Verbindungen der Formeln I oder II. Das Produkt dieser Umsetzung wird dann mit dem genannten Salz eines nicht koordinierenden Anions zur Reaktion gebracht.

In allen Fällen erhält man ein zur Olefinpolymerisation vorteilhaft einsetzbares immobiles (heterogenes) Katalysatorsystem mit hoher Polymerisationsaktivität.

Die nachfolgenden Beispiele sollen die Erfindung näher erläutern.

### Beispiel 1: Cl₂ZrCp(Cp-Vinyl)

5,29 g (57,4 mmol) 6-Methylfulven wurden in 100 cm³ THF gelöst und mit 38,3 cm³ einer 1,5 m (57,43 mmol) Lithiumdiisopropylamid-THF-Komplex-Lösung in Cyclohexan tropfenweise, innerhalb von 1 h, versetzt und 2 h bei RT gerührt. Nach Filtration wurde eingedampft und NMR-spektroskopisch der Gehalt an Li^{⊕} (Cp-Vinyl)^{⊖} zu ca. 85 % bestimmt; Rest war anhaftendes Lösemittel. Die Ausbeute betrug 6,27 g (ca. 95 %).

1,13 g (85 %ig - 11,52 mmol) Li (Cp-Vinyl), in 30 cm³ THF gelöst, wurden zu einer Suspension von 3,03 g (11,53 mmol) Cl₃CpZr in 30 cm³ THF innerhalb von 15 min bei -78 °C gegeben. Nach Erwärmung au fRT wurde noch 3 h gerührt und die klare, gelbe Lösung eingedampft. Der Rückstand wurde mit 20 cm³ n-Pentan verrührt und erneut eingedampft. Nach Verrühren mit Toluol wurde filtriert, das Lösungsmittel abgezogen, n-Pentan zugefügt und nach Digerieren abgezogen. Nach Aufnehmen in CHCl₃ wurde filtriert, eingedampft, mit n-Pentan digeriert, wobei sich der ölige Rückstand verfestigte, filtriert und getrocknet.
Ausbeute: 2,38 g (7,48 mmol - 64,8 %) an (Cp)(Cp-Vinyl)ZrCl₂.
Das erhaltene Produkt zeigte das zu erwartende NMR-Spektrum (100 MHz, CDCl₃):
δ = 5,35 (dd, 1H, J_{cis} = 11, J_{gem} = 1Hz), 5,58 (dd, 1H, Jₜᵣₐₙₛ = 18 Hz), 6,33 - 6,53 (m, 9 H, Cp-H), 6,58 (dd, 1H).

### Beispiel 2: Homopolymerisation von Cl₂ZrCp(Cp-Vinyl)

0,34 g (1,07 mmol) des Komplexes von Beispiel 1 wurden in 10 cm³ Toluol gelöst, 0,1 g α,α'-Azoisobutyronitril (AIBN) zugegeben und 2 h bei 90 °C gerührt. Es bildete sich ein grünlicher Feststoff, der abfiltriert und mit Lösemittel gewaschen wurde. Nach Trocknen wurden 0,11 g Produkt erhalten; der Zr-Gehalt betrug 22,5 %.

### Beispiel 3: Homopolymerisation von Cl₂ZrCp(Cp-Vinyl)

0,25 g (0,79 mmol) des Komplexes von Beispiel 1 wurden in 10 cm³ Toluol gelöst, 0,1 g AIBN zugefügt und 4 h bei 100 °C gerührt; nach weiterer Zugabe von 0,1 g AIBN wurde nochmals 6 h bei dieser Temperatur gerührt, der bräunliche Niederschlag abfiltriert, gewaschen und getrocknet. Die 0,18 g Produkt enthielten 24 % Zr.

### Beispiel 4: Cl₂Zr(Cp-Vinyl)₂

Zu 2,58 g (6,84 mmol) Cl₄Zr(thf)₂ in 50 cm³ THF wurden bei -78 °C portionsweise 1,54 g (85 %ig - 14 mmol) Li(Cp-Vinyl) in 100 cm³ THF gegeben. Nach Erwärmung auf -20 °C wurde innerhalb 1 h bei RT das Lösemittel abgezogen. Der gelb-orange Eindampfrückstand wurde mit insgesamt 300 cm³ n-Hexan/Toluol 2:1 (vol.) portionsweise extrahiert, filtriert und eingedampft. Zum Rückstand wurde n-Pentan gegeben und wenige cm³ Toluol, nach Filtration wurde eingedampft und mit wenig n-Pentan extrahiert. Es verbleibt ein weißlicher Rückstand, welcher im Vakuum getrocknet wurde.
Ausbeute: 0,37 g (1,03 mmol - 15 %) an (Cp-Vinyl)₂ZrCl₂
Die Verbindung zeigte eine korrekte Elementaranalyse.

### Beispiel 5 Me₂ZrCp(Cp-Vinyl)

0,4 g (1,26 mmol) Komplex aus Beispiel 1 wurden in 10 cm³ Et₂O bei -50 °C tropfenweise mit 1,75 cm³ einer 1,6 n (2,8 mmol) etherischen Methyllithiumlösung versetzt und 1 h bei 0 °C gerührt. Nach Austausch des Lösungsmittel gegen n-Pentan wurde noch 1 h bei RT gerührt, eingedampft und mit Toluol extrahiert. Es verbleibt dann ein weißer Eindampfrückstand.
Ausbeute: 0,2 g (0,72 mmol - 57 %) an (Cp)(Cp-Vinyl)ZrMe₂
Das NMR-Spektrum zeigt das zu erwartende Integrationsverhältnis von 2:1 für Aromaten - zu gesättigten Kohlenstoff - H.

### Beispiel 6: Cl₂Zr(Me₂,Vinyl-Cp)₂SiMe₂

3 g (10,1 mmol) (2,3-Me₂-5-Vinyl-C₅H₂)₂SiMe₂, in 50 cm³ Et₂O, wurden mit 12,7 cm³ 1,6 n (20,3 mmol) etherischem Methyllithium tropfenweise versetzt und dann 2 h bei ca. 35 °C gerührt. Dann wurde das Lösemittel abgezogen. 2,35 g (10,1 mmol) ZrCl₄ wurden in 100 cm³ CH₂CCl₂ bei -78 °C suspendiert und der oben beschriebene Eindampfrückstand wurde zur Suspension zugegeben. Es wurde langsam auf 0 °C erwärmt, 1 h bei dieser Temperatur gerührt und nach Filtration das Lösemittel abgezogen. Der filtrierte und eingedampfte Toluolextrakt wurde NMR-spektroskopisch untersucht. Er weist ein Komplexgemisch aus.
Ausbeute: 0.87 g (2,19 mmol - 22 %) an rac/meso-{(2,3-Me₂-5-Vinyl-C₅H₂)₂SiMe₂}ZrCl₂

### Beispiel 7: Copolymerisation von Cl₂ZrCp(Cp-Vinyl)

Eine Mischung aus 0,1 g (0,31 mmol) des obengenannten Komplexes und 5 cm³ Vinylbenzol wurden 6 h bei 60 °C in 50 cm³ Toluol/n-Hexan (1:4 vol.) unter Zugabe von 0,15 mg AIBN gerührt. Nach sehr geringer Feststoffbildung wurde eingedampft, mehrmals in Toluol aufgenommen und wieder abgezogen. Das NMR-Spektrum des letzten Rückstands weist keine Vinylgruppen mehr aus.
Ausbeute: 3,4 g an Copolymer; Zr-Gehalt: 0,88 %.

### Beispiel 8: Terpolymerisation von Cl₂ZrCp(Cp-Vinyl)

0,2 g (0,63 mmol) des obengenannten Komplexes, 0,5 cm³ Divinylbenzol und 8,5 cm³ Vinylbenzol wurden in 15 cm³ Toluol mit 0,1 g AIBN 2 h bei 80 °C gerührt. Die gelartige Masse wurde nach Zugabe weiterer 20 cm³ Lösemittel noch 3 h bei dieser Temperatur gerührt. Nach Eindampfen wurde der Rückstand intensiv mit n-Pentan gewaschen und getrocknet.
Ausbeute: 4,57 g; Zr-Gehalt 0,94 %.

### Beispiel 9: Terpolymerisation von Cl₂ZrCp(Cp-Vinyl)

0,25 g (0,79 mmol) des Komplexes von Beispiel 1, 1 cm³ Divinylbenzol und 8,5 cm³ Vinylbenzol wurden in 15 cm³ Toluol mit 0,1 g AIBN bei 80 °C gerührt. Nach 2 h wurde die gelartige Masse mit 15 cm³ Toluol verdünnt und noch 2 h bei obiger Temperatur gerührt. Das weitere Vorgehen entsprach Beispiel 8.
Ausbeute: 3,74 g; Zr-Gehalt: 1,2 %.

### Beispiel 10 Copolymerisation von (Cp-Vinyl)₂ZrCl₂

0,2 g (0,56 mmol) der obengenannten Verbindung und 5 cm³ Vinylbenzol wurden in 20 cm³ Toluol mit 0,1 g AIBN bei 75 °C 5 h gerührt. Die erhaltene Masse wurde nach Eindampfen mit n-Pentan gewaschen und getrocknet. Das NMR-Spektrum ließ noch wenig Vinylbenzol, aber keine Vinyl-Signale der Metallocenverbindung erkennen.
Ausbeute: 3 g; Zr-Gehalt 1,5 %.

### Beispiel 11: Terpolymerisation von Me₂ZrCp(Cp-Vinyl)

0,1 g (0,36 mmol) des obengenannten Komplexes, 0,5 cm³ Divinylbenzol und 5 cm³ Vinylbenzol wurden in 15 cm³ Toluol mit 0,1 g AIBN bei 80 °C 4 h gerührt. Das gelartige Produkt wurde abfiltriert, gewaschen und getrocknet.
Ausbeute: 3,7 g; Zr-Gehalt: 0,7 %.

### Beispiel 12: Terpolymerisation von [(2,3-Me₂-5-Vinyl-C₅H₂)₂SiMe₂]ZrCl₂

0,22 g (0,51 mmol) des genannten Komplexes, 1 cm³ Divinylbenzol und 8 cm³ Vinylbenzol wurde in 30 cm³ Toluol mit 0,1 g AIBN bei 85 °C 7 h gerührt. Nach Eindampfen und intensiver Wäsche mit n-Pentan wurde getrocknet.
Ausbeute: 4,2 g; 1 % Zr-Gehalt.

### Beispiel 13: Homopolymerisation von Cl₂ZrCp(Cp-Vinyl) ohne Lösemittel (thermisch)

0,24 g (0,75 mmol) der genannten Verbindung wurden in einem Schlenkgefäß 1 h bei 115 °C erwärmt. Dabei nimmt die Substanz eine dunklere Farbe an. Dann wurde mit Toluol extrahiert und abfiltriert. Es wurden 0,19 g Produkt mit einem Zr-Gehalt von 23 % erhalten.

### Beispiel 14: Umsetzung eines Metallocenpolymers mit einem Cokatalysator

2 g Produkt aus Beispiel 11 wurden in 10 cm³ Toluol aufgeschlämmt und dazu 0,13 g (0,15 mmol) [Bu₃NH][B(C₆F₅)₄] bei 0 °C gegeben und 1 h gerührt. Von der tief gefärbten Mischung wurde abdekantiert, mit Lösemittel gewaschen und dann im Vakuum getrocknet.
Ausbeute: 1,87 g; Zr-Gehalt: 0,6 %.

### Beispiel 15: Umsetzung eines Metallocenpolymers mit einem Alkylierungsmittel und einem Cokatalysator

2 g Produkt aus Beispiel 10 wurden in 25 cm³ Et₂O aufgeschlämmt und 0,4 cm³ einer 1,5 n (0,64 mmol) etherischen MeLi-Lösung bei -20 °C zugegeben, 1 h bei 0 °C gerührt, abfiltriert, das Lösemittel gegen 20 cm³ Toluol ausgetauscht und 0,12 g (0,21 mmol) [Bu₃NH][B-(p-Tolyl)₄] zugegeben. Nach 1 h Rühren wurde abfiltriert, gewaschen und getrocknet.
Ausbeute: 0,19 g; Zr-Gehalt: 1,3 %.

### Olefinpolymerisation mit einem Metallocenmonomer als Katalysator

### Beispiel 16

In einem 1,5-dm³-Reaktor wurden 900 cm³ einer Dieselölfraktion (Kp: 100-120 °C) vorgelegt und auf 70 °C erwärmt. Der Reaktor wurde mit 13 mmol einer 10 %igen toluolischen Methylaluminoxanlösung und 1 µmol Katalysator (aus Beispiel 1) beschickt. Dann wurde Ethylen bis zu einem Enddruck von 7 bar aufgepreßt und 2 h polymerisiert. Dann wurde die Polymerlösung mit wäßriger HCl zersetzt. Das Polymer isoliert, mit Aceton gewaschen und im Vakuum getrocknet. Man erhielt 82,7 g Polyethylen, entsprechend einer Aktivität von 41,4 kg Polymer/mmol Zr•h (weitere Daten siehe Tabelle).

### Beispiel 17

Es wurde verfahren wie in Beispiel 16. Der Polymerisationskontakt enthielt das Metallocenmonomer aus Beispiel 4. Man erhielt 78,9 g Polymer. Dies entspricht einer Ausbeute von 39,5 kg Polyethylen/mmol Zr•h (weitere Daten siehe Tabelle).

Olefinpolymerisation mit Metallocenpolymeren als Katalysator

### Beispiel 18

Es wurde wie in Beispiel 16 verfahren. Als Katalysator wurden das Produkt aus Beispiel 7 (0,001 mmol Zr) eingesetzt. Es wurden 72 g Polyethylen erhalten, entsprechend 36 kg Polymer/mmol Zr•h (weitere Daten siehe Tabelle).

### Beispiel 19

Die Polymerisation wurde wie in Beispiel 16 ausgeführt. Die eingesetzte Menge Katalysator gemäß Beispiel 10 entsprach 0,0005 mmol Zr. Es wurden 27,1 g Polyethylen erhalten. Dies entspricht 27,1 kg Polymer/mmol Zr•h (weitere Daten siehe Tabelle).

### Beispiel 20

Es wurde verfahren wie in Beispiel 16 mit dem Unterschied, daß der Katalysator aus Beispiel 8 eingesetzt wurde (0,5 µmol Zr). Die Ausbeute nach 2 h betrug 52,6 g Polyethylen mit einer VZ von 620 cm³/g (siehe Tabelle).

### Beispiel 21

Es wurde verfahren wie in Beispiel 16 mit dem Unterschied, daß der Katalysator aus Beispiel 9 eingesetzt wurde (0,2 µmol Zr). Die Ausbeute nach 2 h betrug 32,2 g Polyethylen mit einer VZ von 671 cm³/g (siehe Tabelle).

### Beispiel 22

In einem 1,5-dm³-Reaktor wurden 900 cm³ einer Dieselölfraktion (Kp: 100-120 °C) und 0,015 g (entspricht 0,001 mmol Zr) Kontakt aus Beispiel 14 vorgelegt und auf 70 °C aufgeheizt. Nach Aufpressen von Ethylen zu einem Enddruck von 7 bar wurde 2 h polymerisiert. Nach Zersetzung mit HCl wurde das Produkt mit Aceton gewaschen und getrocknet. Man erhielt 63,7 g Polyethylen, entsprechend 31,9 kg Polymer / mmol Zr·h (weitere Daten siehe Tabelle).

### Beispiel 23

Es wurde wie in Beispiel 22 verfahren, der Kontakt entstammte allerdings dem Beispiel 15 und die Ausbeute an Polyethylen betrug 68,0 g. Dies entspricht einer Aktivität von 34 g Polymer/mmol Zr•h (weitere Daten siehe Tabelle).

### Beispiel 24

Ein trockener 16-dm³-Reaktor wurde nach Spülung mit Stickstoff mit 10 dm³ flüssigem Propylen befüllt. Dann wurden 40 mmol einer toluolischen Lösung von Methylaluminoxan zugegeben und 15 min bei 30 °C gerührt.
Dazu parallel wurde eine Mischung aus 0,05 mmol Metallocen gemäß Beispiel 6 und 20 mmol einer toluolischen Methylaluminoxan-Lösung hergestellt und durch 15 minütiges Stehenlassen voraktiviert.
Diese Mischung wurde dann in den Reaktor gegeben, auf 70 °C aufgeheizt und die Polymerisation gestartet. Nach 1 h wurde durch Abkühlen und Entspannen gestoppt. Es wurden 2,39 kg Polypropylen erhalten. Dies entspricht 47,8 kg/mmol Zr·h (weitere Daten siehe Tabelle).

### Beispiel 25

Es wurde wie in Beispiel 24 verfahren. Als Katalysator wurden aber 0,05 mmol Metallocenpolymer gemäß Beispiel 12 eingesetzt.
Es wurden 1,95 kg Polypropylen erhalten, entsprechend 39 kg Polymer/mmol Zr•h (weitere Daten siehe Tabelle).

### Beispiel 26

In einem 1,5-dm³-Reaktor wurden 80 cm³ Cyclopentan, gelöst in 800 ml Dieselöl (Siedepunkt 100-120 °C), vorgelegt und mit 60 mmol einer toluolischen Methylaluminoxanlösung und 0,01 mmol Metallocenpolymer gemäß Beispiel 8 beschickt. Nach 2 stündiger Polymerisation bei 60 °C wurde mit Methanol gestoppt; das erhaltene Polymer filtriert und getrocknet. Die Ausbeute betrug 6,2 g, entsprechend 0,31 kg Polymer/mmol Zr•h.

### Beispiel 27

In einem 1,5-dm³-Reaktor wurden 600 cm³ einer Dieselölfraktion (Kp: 100-120 °C) und 300 cm³ Cyclopenten vorgelegt und auf 60 °C aufgeheizt. Der Reaktor wurde mit 60 mmol einer toluolischen Methylaluminoxanlösung und 0,01 mmol Metallocenpolymer gemäß Beispiel 2 beschickt. Nach Aufpressen von Ethylen bis 7 bar wurde der Ansatz 2 h polymerisiert, die Polymerlösung dann in eine Aceton/Methanol-Mischung gegeben, das Cyclopenten-Ethylen-Copolymer isoliert und getrocknet. Die Ausbeute betrug 97,6 g, entsprechend 4,88 kg Copolymer/mmol Zr•h (weitere Daten siehe Tabelle).

### Beispiel 28

Ein 1,5-dm³-Polymerisationsreaktor wurde mit Stickstoff und dann mit Ethylen gespült und mit einer Lösung von 25 g Norbornen in 750 cm³ Toluol befüllt. Unter Rühren wurde dann der Reaktor auf 25 °C gebracht und 1 bar Ethylen aufgedrückt.
Danach wurden 20 mmol einer toluolischen Methylaluminoxanlösung in den Reaktor gegeben und 15 min gerührt, wobei der Ethylendruck durch Nachdosieren bei 1 bar gehalten wurde.
Parallel wurden 0,05 mmol Metallocenpolymer gemäß Beispiel 12 in 10 mmol toluolische Methylaluminoxanlösung gegeben und durch 15 minütiges Stehenlassen voraktiviert.
Dann wurde diese Mischung in den Reaktor dosiert und 1 h bei 25 °C unter Rühren polymerisiert, wobei der Ethylendruck bei 1 bar gehalten wurde. Dann wurde der Inhalt in ein Gefäß mit 100 cm³ Isopropanol abgelassen und die Mischung mit 2 dm³ Aceton versetzt, 10 min gerührt und der suspendierte polymere Feststoff abgetrennt. Dann wurde 2 h in einer alkalischen Ethanollösung gerührt, das Polymer abfiltriert und 10 h bei 80 °C im Vakuum getrocknet. Es wurden 19 g Copolymer erhalten, entsprechend 0,3 kg/mmol Zr•h (weitere Daten siehe Tabelle)

Abkürzungen: Cp= Cyclopentadienyl, THF = Tetrahydrofuran,
MAO = Methylaluminoxan, Me = Methyl, Et = Ethyl,
RT = Raumtemperatur, VZ = Viskositätszahl.

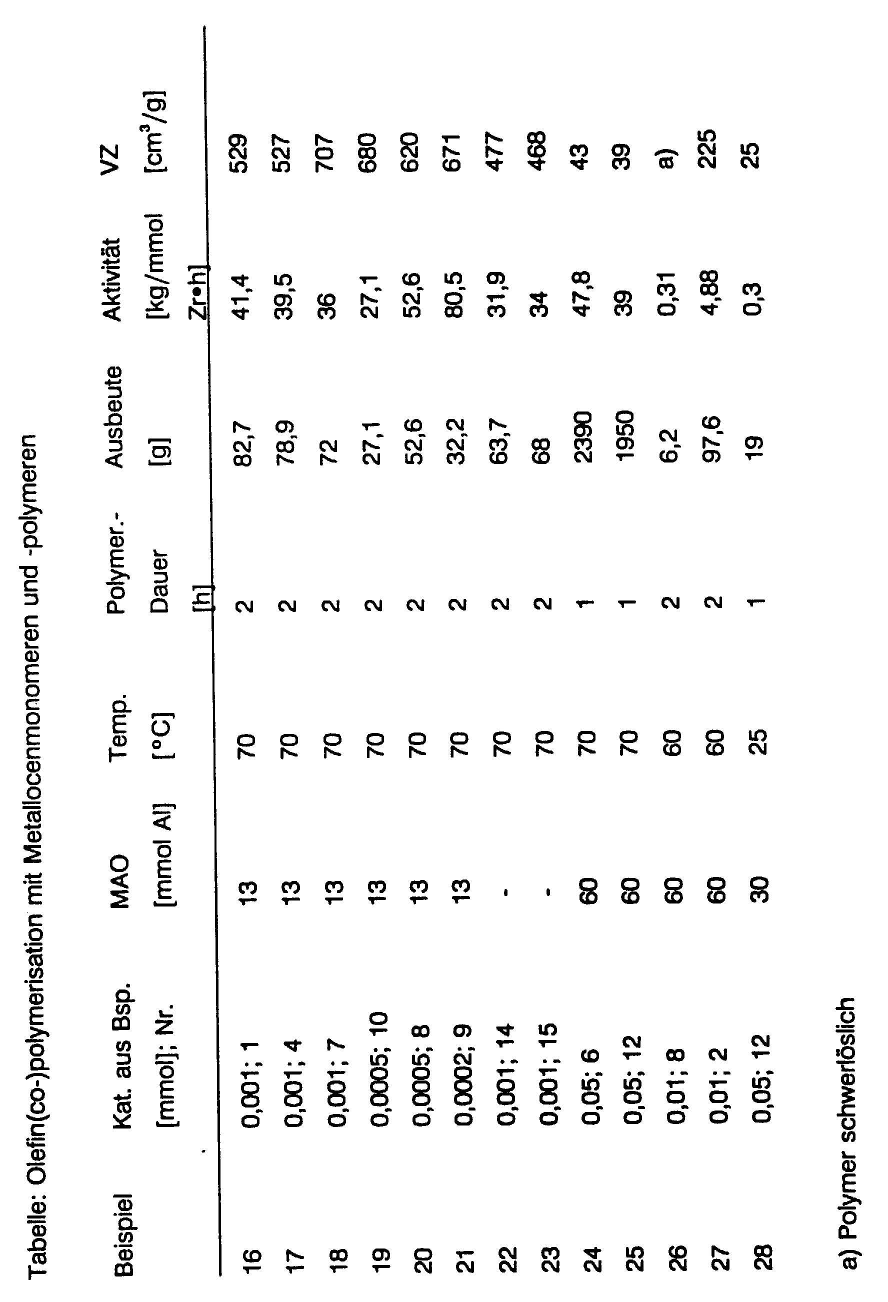

## Patentansprüche

1. Verfahren zur Herstellung einer immobilen Metallocenkatalysatorkomponente, dadurch gekennzeichnet, daß man ein Metallocen der Formel I 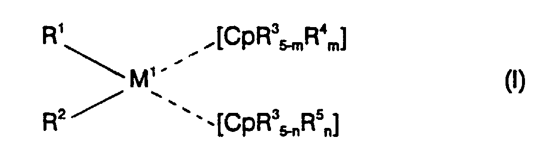 und/oder der Formel II 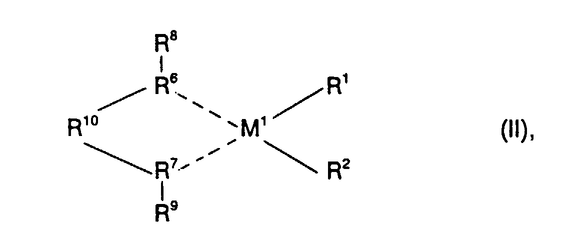 worin
M¹ Zirkonium oder Hafnium ist und
Cp einen Cyclopentadienylrest bedeutet,
R¹ und R² gleich oder verschieden sind und ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe oder eine C₆-C₁₀-Aryloxygruppe bedeuten,
R¹ und R² auch miteinander verknüpft sein können und mit M¹ einen Metallocyclus bilden können,
die Reste R³ gleich oder verschieden sind und ein Wasserstoffatom, ein Halogenatom, eine C₁-C₁₀-Alkylgruppe, eine C₆-C₁₀-Arylgruppe, eine C₇-C₂₀-Arylalkylgruppe, eine C₁-C₁₀-Fluoralkylgruppe oder einen Organometallrest wie C₁-C₁₀-Trialkylsilyl, C₆-C₁₀-Aryl-C₁-C₁₀-dialkylsilyl, C₁-C₁₀-Alkyl-C₆-C₁₀-diarylsilyl oder C₆-C₁₀-Triarylsilyl bedeuten,
R⁴ und R⁵ gleich oder verschieden sind und eine Vinylgruppe, eine C₆-C₁₈-Arylvinylgruppe, eine C₁-C₈-Alkylvinylgruppe oder eine C₆-C₁₈-Vinylarylgruppe, die alle substituiert sein können, bedeuten,
R⁶ und R⁷ gleich oder verschieden sind und einen Cyclopentadienyl-, Indenyl- oder Fluorenylrest bedeuten, wobei die genannten Ringe mit M¹ eine Sandwichstruktur bilden können,
R⁸ und R⁹ gleich oder verschieden sind,
Substituenten von R⁶ und R⁷ sind und die für R³, R⁴ und R⁵ genannten Bedeutungen besitzen, mit der Maßgabe, daß R⁶ und R⁷ ein- oder mehrfach durch R⁸ oder R⁹ substituiert sein können, aber mindestens ein Ring R⁶ oder R⁷ mindestens einen Rest R⁸ oder R⁹ in der Bedeutung von R⁴ und R⁵ tragen muß,
R¹⁰ die in den Formeln III-VII dargestellte Bedeutung hat 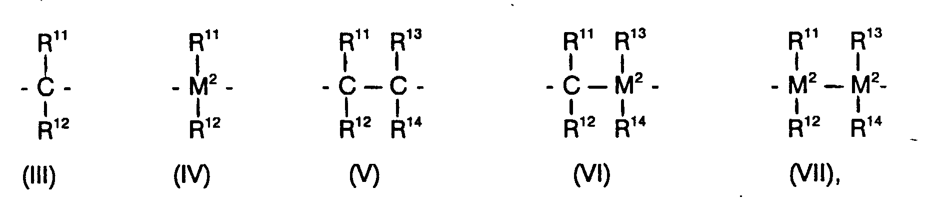 wobei
M² Silizium, Germanium oder Zinn ist und
R¹¹, R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₆-C₁₀-Aryloxygruppe oder eine C₇-C₂₀-Arylalkylgruppe bedeuten,
R¹¹ und R¹², R¹³ und R¹⁴, R¹¹ und R¹³ oder R¹² und R¹⁴ mit den sie verbindenden Atomen ein Ringsystem ausbilden können, und
m und n gleich oder verschieden sind und eine Zahl von 0 bis 5 bedeuten, wobei m+n ≥ 1 sein muß,
homo- oder copolymerisiert oder eine Verbindung der Formel I und/oder der Formel II mit einem (Di-)Vinylaromaten copolymerisiert.

2. Verfahren gemäß Anspruch 1, dadurch gekennzeichnet, daß in den Formeln I und II
R¹ und R² gleich oder verschieden sind und ein Wasserstoffatom, ein Halogenatom, eine C₁-C₄-Alkylgruppe, eine C₁-C₄-Alkoxygruppe, eine C₇-C₁₄Arylalkylgruppe, eine C₆-C₁₀-Arylgruppe oder eine C₆-C₁₀-Aryloxygruppe bedeuten,
R¹ und R² auch miteinander verknüpft sein können und mit M¹ einen Metallocyclus bilden können,
die Reste R³ gleich oder verschieden sind und ein Wasserstoffatom, ein Halogenatom, eine C₁-C₄-Alkylgruppe, eine C₆-C₁₀-Arylgruppe, eine C₇-C₁₄-Arylalkylgruppe, eine C₁-C₆-Fluoralkylgruppe oder einen Organometallrest wie C₁-C₁₀-Trialkylsilyl, C₆-C₁₀-Aryl-C₁-C₆-dialkylsilyl, C₁-C₄-Alkyl-C₆-C₁₀-diarylsilyl oder C₆-C₁₀-Triarylsilyl bedeuten,
R⁴ und R⁵ gleich oder verschieden, vorzugsweise gleich, sind und eine Vinylgruppe, eine C₆-C₁₈-Arylvinylgruppe, eine C₁-C₈-Alkylvinylgruppe oder eine C₆-C₁₈-Vinylarylgruppe, die durch eine C₁-C₄-Alkoxygruppe, C₁-C₄-Alkylgruppe oder OH-Gruppe substituiert sein können, bedeuten,
R⁶ und R⁷ gleich oder verschieden sind und einen Cyclopentadienyl-, Indenyl- oder Fluorenylrest bedeuten, wobei die genannten Ringe mit M¹ eine Sandwichstruktur bilden können,
R⁸ und R⁹ gleich oder verschieden sind,
Substituenten von R⁶ und R⁷ sind und die für R³, R⁴ und R⁵ genannten Bedeutungen besitzen, mit der Maßgabe, daß R⁶ und R⁷ ein- oder mehrfach durch R⁸ oder R⁹ substituiert sein können, aber mindestens ein Ring R⁶ oder R⁷ mindestens einen Rest R⁸ oder R⁹ in der Bedeutung von R⁴ und R⁵ tragen muß,
R¹⁰ die in den Formeln III-VII dargestellte Bedeutung hat, wobei
M² Silizium oder Germanium ist und R¹¹, R¹², R¹³ und R¹⁴ gleich oder verschieden sind und ein Wasserstoffatom, ein Halogenatom, eine C₁-C₆-Alkylgruppe, eine C₁-C₆-Fluoralkylgruppe, eine C₆-C₁₀-Arylgruppe, eine C₆-C₁₀-Fluorarylgruppe, eine C₁-C₆-Alkoxygruppe, eine C₆-C₁₀-Aryloxygruppe oder eine C₇-C₁₄-Arylalkylgruppe bedeuten,
R¹¹ und R¹², R¹³ und R¹⁴, R¹¹ und R¹³ oder R¹² und R¹⁴ mit den sie verbindenden Atomen ein Ringsystem ausbilden können, und
m und n gleich oder verschieden sind und eine Zahl von 0 bis 5 bedeuten, wobei m+n ≥ 1 sein muß.

3. Verfahren gemäß Anspruch 1 oder 2, dadurch gekennzeichnet, daß in den Formeln I und II
R¹ und R² gleich oder verschieden sind und ein Wasserstoffatom, ein Halogenatom, eine C₁-C₄-Alkylgruppe oder eine C₆-C₁₀-Arylgruppe bedeuten,
R¹ und R² auch miteinander verknüpft sein können und mit M¹ einen Metallocyclus bilden können,
die Reste R³ gleich oder verschieden sind und ein Wasserstoffatom, ein Halogenatom, eine C₁-C₄-Alkylgruppe, eine C₆-C₁₀-Arylgruppe oder einen Organometallrest wie C₁-C₁₀-Trialkylsilyl bedeuten,
R⁶ und R⁷ einen Cyclopentadienylrest bedeuten und
R¹⁰ die in den Formelnlll-V dargestellte Bedeutung hat, wobei
M² Silizium ist und R¹¹, R¹², R¹³ und R¹⁴ gleich oder verschieden sind und ein Wasserstoffatom, ein Halogenatom, eine C₁-C₆-Alkylgruppe, oder eine C₆-C₁₀-Arylgruppe bedeuten,
R¹¹ und R¹², R¹³ und R¹⁴, R¹¹ und R¹³ oder R¹² und R¹⁴ mit den sie verbindenden Atomen ein Ringsystem ausbilden können.

4. Verfahren gemäß einem oder mehreren der Ansprüche 1-3, dadurch gekennzeichnet, daß die Polymerisation thermisch oder durch einen Radikalbildner ausgelöst wird.

5. Verfahren gemäß einem oder mehreren der Ansprüche 1-4, dadurch gekennzeichnet, daß die Polymerisation durch einen Radikalbildner ausgelöst wird.

6. Verfahren gemäß Anspruch 5, dadurch gekennzeichnet, daß es sich bei dem Radikalbildner um α,α'-Azo-isobutyronitril handelt.

7. Immobile Metallocenkatalysatorkomponente, herstellbar nach dem Verfahren gemäß einem oder mehreren der Ansprüche 1-6.

8. Verwendung einer immobilen Metallocenkatalysatorkomponente gemäß Anspruch 7 als Katalysator bei der Olefinpolymerisation.

9. Metallocen der Formel I 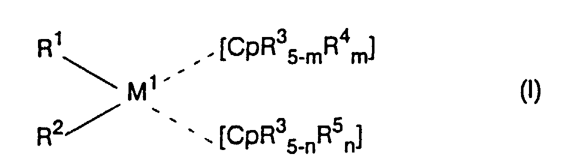 oder der Formel II 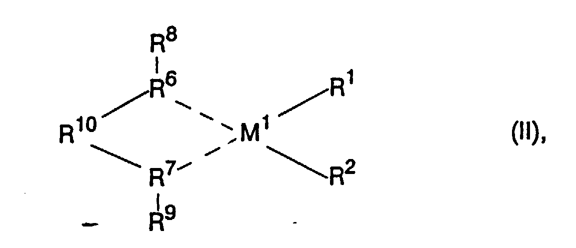 worin
M¹ Zirkonium oder Hafnium ist und
Cp einen Cyclopentadienylrest bedeutet,
R¹ und R² gleich oder verschieden sind und ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe oder eine C₆-C₁₀-Aryloxygruppe bedeuten, R¹ und R² auch miteinander verknüpft sein können und mit M¹ einen Metallocyclus bilden können,
die Reste R³ gleich oder verschieden sind und ein Wasserstoffatom, ein Halogenatom, eine C₁-C₁₀-Alkylgruppe, eine C₆-C₁₀-Arylgruppe, eine C₇-C₂₀-Arylalkylgruppe, eine C₁-C₁₀-Fluoralkylgruppe oder einen Organometallrest wie C₁-C₁₀-Trialkylsilyl, C₆-C₁₀-Aryl-C₁-C₁₀-dialkylsilyl, C₁-C₁₀-Alkyl-C₆-C₁₀-diarylsilyl oder C₆-C₁₀-Triarylsilyl bedeuten,
R⁴ und R⁵ gleich oder verschieden sind und eine Vinylgruppe, eine C₁-C₈-Alkylvinylgruppe oder eine C₆-C₁₈-Vinylarylgruppe, die alle substituiert sein können, bedeuten,
R⁶ und R⁷ gleich oder verschieden sind und einen Cyclopentadienyl-, Indenyl- oder Fluorenylrest bedeuten, wobei die genannten Ringe mit M¹ eine Sandwichstruktur bilden können,
R⁸ und R⁹ gleich oder verschieden sind,
Substituenten von R⁶ und R⁷ sind und die für R³, R⁴ und R⁵ genannten Bedeutungen besitzen, mit der Maßgabe, daß R⁶ und R⁷ ein- oder mehrfach durch R⁸ oder R⁹ substituiert sein können, aber mindestens ein Ring R⁶ oder R⁷ mindestens einen Rest R⁸ oder R⁹ in der Bedeutung von R⁴ und R⁵ tragen muß,
R¹⁰ die in den Formeln III-VII dargestellte Bedeutung hat 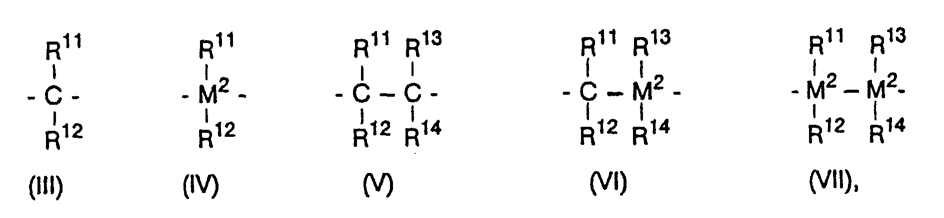 wobei
M² Silizium, Germanium oder Zinn ist und
R¹¹, R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₆-C₁₀-Aryloxygruppe oder eine C₇-C₂₀-Arylalkylgruppe bedeuten,
R¹¹ und R¹², R¹³ und R¹⁴, R¹¹ und R¹³ oder R¹² und R¹⁴ mit den sie verbindenden Atomen ein Ringsystem ausbilden können, und
m und n gleich oder verschieden sind und eine Zahl von 0 bis 5 bedeuten, wobei m+n ≥ 1 sein muß.

## Claims

1. A process for the preparation of an immobile metallocene catalyst component, wherein a metallocene of formula I 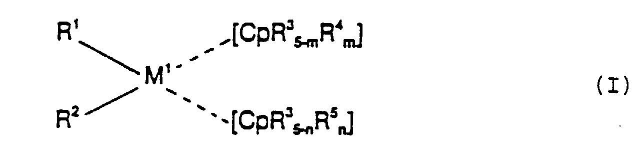 and/or of formula II 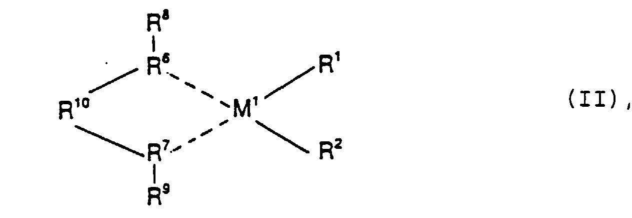 in which
M¹ is zirconium or hafnium and
Cp is a cyclopentadienyl radical,
R¹ and R² are identical or different and are a hydrogen atom, a halogen atom, a C₁-C₁₀-alkyl group, a C₁-C₁₀-alkoxy group, a C₇-C₂₀-arylalkyl group, a C₆-C₁₀-aryl group or a C₆-C₁₀-aryloxy group, and
R¹ and R² can also be linked to one another and together with M¹ can form a metallo ring,
the radicals R³ are identical or different and are a hydrogen atom, a halogen atom, a C₁-C₁₀-alkyl group, a C₆-C₁₀-aryl group, a C₇-C₂₀-arylalkyl group, a C₁-C₁₀-fluoroalkyl group or an organometallic radical, such as C₁-C₁₀-trialkylsilyl, C₆-C₁₀-aryl-C₁-C₁₀-dialkylsilyl, C₁-C₁₀-alkyl-C₆-C₁₀-diarylsilyl or C₆-C₁₀-triarylsilyl,
R⁴ and R⁵ are identical or different and are a vinyl group, a C₆-C₁₈-arylvinyl group, a C₁-C₆-alkylvinyl group or a C₆-C₁₈-vinylaryl group, all of which may be substituted,
R⁶ and R⁷ are identical or different and are a cyclo-pentadienyl, indenyl or fluorenyl radical, it being possible for said rings together with M¹ to form a sandwich structure,
R⁸ and R⁹ are identical or different,
are substituents of R⁶ and R⁷ and have the meanings given for R³, R⁴ and R⁵, with the proviso that R⁶ and R⁷ can be monosubstituted or polysubstituted by R⁸ or R⁹, but at least one ring R⁶ or R⁷ must carry at least one radical R⁸ or R⁹ having the meaning of R⁴ and R⁵, and
R¹⁰ has the meaning shown in formulae III-VII 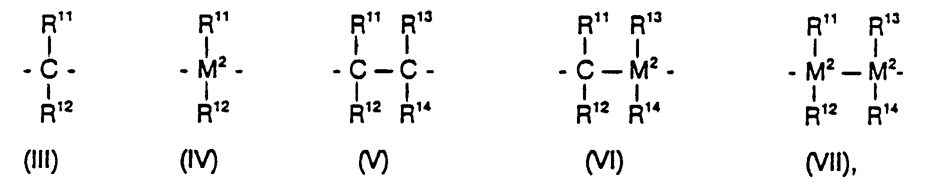 where
M² is silicon, germanium or tin and
R¹¹, R¹², R¹³ and R¹⁴ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₆-C₁₀-aryloxy group or a C₇-C₂₀-arylalkyl group,
R¹¹ and R¹², R¹³ and R¹⁴, R¹¹ and R¹³ or R¹² and R¹⁴ together with the atoms linking them can form a ring system and
m and n are identical or different and are a number from 0 to 5, where m+n must be ≥ 1,
is homopolymerized or copolymerized, or a compound of formula I and/or of formula II is copolymerized with a (di)vinyl-aromatic compound.

2. The process as claimed in claim 1, wherein, in formulae I and II,
R¹ and R² are identical or different and are a hydrogen atom, a halogen atom, a C₁-C₄-alkyl group, a C₁-C₄-alkoxy group, a C₇-C₁₄-arylalkyl group, a C₆-C₁₀-aryl group or a C₆-C₁₀-aryloxy group, and
R¹ and R² can also be linked to one another and together with M¹ can form a metallo ring,
the radicals R³ are identical or different and are a hydrogen atom, a halogen atom, a C₁-C₄-alkyl group, a C₆-C₁₀-aryl group, a C₇-C₁₄-arylalkyl group, a C₁-C₆-fluoroalkyl group or an organometallic radical, such as C₁-C₁₀-trialkylsilyl, C₆-C₁₀-aryl-C₁-C₆-dialkylsilyl, C₁-C₄-alkyl-C₆-C₁₀-diarylsilyl or C₆-C₁₀-triarylsilyl,
R⁴ and R⁵ are identical or different, preferably identical, and are a vinyl group, a C₆-C₁₈-arylvinyl group, a C₁-C₈-alkylvinyl group or a C₆-C₁₈-vinylaryl group, which groups may be substituted by a C₁-C₄-alkoxy group, C₁-C₄-alkyl group or OH group,
R⁶ and R⁷ are identical or different and are a cyclo-pentadienyl, indenyl or fluorenyl radical, it being possible for said rings together with M¹ to form a sandwich structure,
R⁸ and R⁹ are identical or different,
are substituents of R⁶ and R⁷ and have the meanings given for R³, R⁴ and R⁵, with the proviso that R⁶ and R⁷ can be monosubstituted or polysubstituted by R⁸ or R⁹, but at least one ring R⁶ or R⁷ must carry at least one radical R⁸ or R⁹ having the meaning of R⁴ and R⁵, and
R¹⁰ has the meaning shown in formulae III-VII, where M² is silicon or germanium and R¹¹, R¹², R¹³ and R¹⁴ are identical or different and are a hydrogen atom, a halogen atom, a C₁-C₆-alkyl group, a C₁-C₆-fluoroalkyl group, a C₆-C₁₀-aryl group, a C₆-C₁₀-fluoroaryl group, a C₁-C₆-alkoxy group, a C₆-C₁₀-aryloxy group or a C₇-C₁₄-arylalkyl group,
R¹¹ and R¹², R¹³ and R¹⁴, R¹¹ and R¹³ or R¹² and R¹⁴ together with the atoms linking them can form a ring system, and
m and n are identical or different and are a number from 0 to 5, where m+n must be ≥ 1.

3. The process as claimed in claim 1 or 2, wherein, in formulae I and II,
R¹ and R² are identical or different and area hydrogen atom, a halogen atom, a C₁-C₄-alkyl group or a C₆-C₁₀-aryl group, and
R¹ and R² can also be linked to one another and together with M¹ can form a metallo ring,
the radicals R³ are identical or different and are a hydrogen atom, a halogen atom, a C₁-C₄-alkyl group, a C₆-C₁₀-aryl group or an organometallic radical, such as C₁-C₁₀-trialkylsilyl,
R⁶ and R⁷ are a cyclopentadienyl radical, and
R¹⁰ has the meaning shown in formulae III-V, where M² is silicon and R¹¹, R¹², R¹³ and R¹⁴ are identical or different and are a hydrogen atom, a halogen atom, a C₁-C₆-alkyl group, or a C₆-C₁₀-aryl group, and
R¹¹ and R¹², R¹³ and R¹⁴, R¹¹ and R¹³ or R¹² and R¹⁴ together with the atoms linking them can form a ring system.

4. The process as claimed in one or more of claims 1-3, wherein the polymerization is initiated by the action of heat or by means of a free radical forming agent.

5. The process as claimed in one or more of claims 1-4, wherein the polymerization is initiated by means of a free radical forming agent.

6. The process as claimed in claim 5, wherein the free radical forming agent is α,α'-azo-isobutyronitrile.

7. An immobile metallocene catalyst component, which can be prepared by the process as claimed in one or more of claims 1-6.

8. The use of an immobile metallocene catalyst component as claimed in claim 7 as catalyst in olefin polymerization.

9. A metallocene of formula I 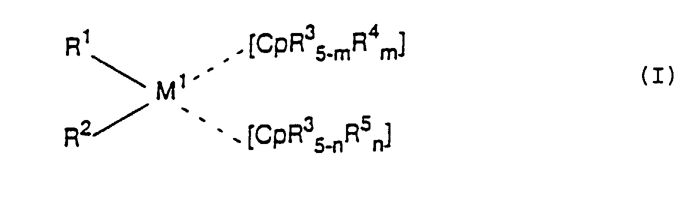 or of formula II 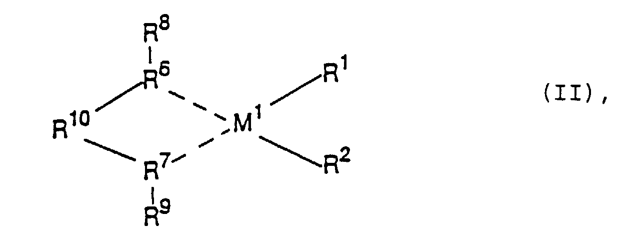 in which
M¹ is zirconium or hafnium and
Cp is a cyclopentadienyl radical,
R¹ and R² are identical or different and are a hydrogen atom, a halogen atom, a C₁-C₁₀-alkyl group, a C₁-C₁₀-alkoxy group, a C₇-C₂₀-arylalkyl group, a C₆-C₁₀-aryl group or a C₆-C₁₀-aryloxy group, and
R¹ and R² can also be linked to one another and together with M¹ can form a metallo ring,
the radicals R³ are identical or different and are a hydrogen atom, a halogen atom, a C₁-C₁₀-alkyl group, a C₆-C₁₀-aryl group, a C₇-C₂₀-arylalkyl group, a C₁-C₁₀-fluoroalkyl group or an organometallic radical, such as C₁-C₁₀-trialkylsilyl, C₆-C₁₀-aryl-C₁-C₁₀-dialkylsilyl, C₁-C₁₀-alkyl-C₆-C₁₀-diarylsilyl or C₆-C₁₀-triarylsilyl,
R⁴ and R⁵ are identical or different and are a vinyl group, a C₁-C₈-alkylvinyl group or a C₆-C₁₈-vinylaryl group, all of which may be substituted,
R⁶ and R⁷ are identical or different and are a cyclo-pentadienyl, indenyl or fluorenyl radical, it being possible for said rings together with M¹ to form a sandwich structure,
R⁸ and R⁹ are identical or different,
are substituents of R⁶ and R⁷ and have the meanings given for R³, R⁴ and R⁵, with the proviso that R⁶ and R⁷ can be monosubstituted or polysubstituted by R⁸ or R⁹, but at least one ring R⁶ or R² must carry at least one radical R⁸ or R⁹ having the meaning of R⁴ and R⁵, and
R¹⁰ has the meaning shown in formulae III-VII 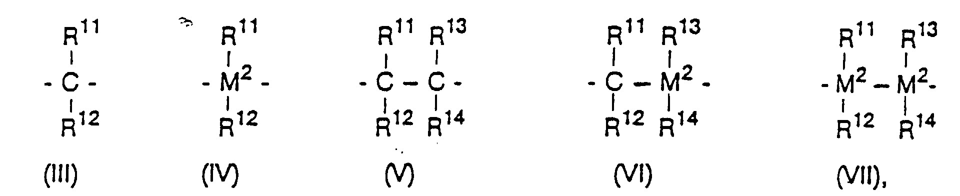 where
M² is silicon, germanium or tin and
R¹¹, R¹², R¹³ and R¹⁴ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₆-C₁₀-aryloxy group or a C₇-C₂₀-arylalkyl group,
R¹¹ and R¹², R¹³ and R¹⁴, R¹¹ and R¹³ or R¹² and R¹⁴ together with the atoms linking them can form a ring system and
m and n are identical or different and are a number from 0 to 5, where m+n must be ≥ 1.

## Revendications

1. Procédé pour préparer un constituant catalyseur immobile à base d'un métallocène, caractérisé en ce qu'on homopolymérise ou copolymérise un métallocène de formule I : 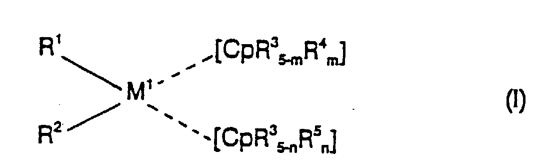 et/ou de formule II : 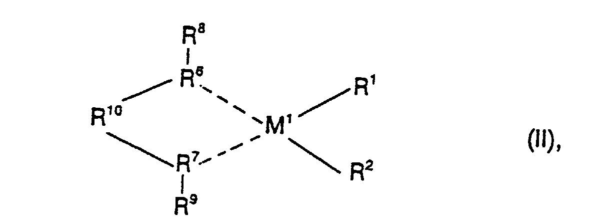 dans lesquelles :
M¹ est le zirconium ou le hafnium, et
Cp désigne un résidu cyclopentadiényle,
R¹ et R² sont identiques ou différents et représentent chacun un atome d'hydrogène, un atome d'halogène, un groupe alkyle en C₁-C₁₀, un groupe alcoxy en C₁-C₁₀, un groupe arylalkyle en C₇-C₂₀, un groupe aryle en C₆-C₁₀ ou un groupe aryloxy en C₆-C₁₀,
R¹ et R² pouvant aussi être reliés l'un à l'autre et pouvant former avec M¹ un radical métallocyclique,
les radicaux R³ sont identiques ou différents et représentent chacun un atome d'hydrogène, un atome d'halogène, un groupe alkyle en C₁-C₁₀, un groupe aryle en C₆-C₁₀, un groupe arylalkyle en C₇-C₂₀, un groupe fluoralkyle en C₁-C₁₀, ou un résidu organométallique tel qu'un groupe tri(alkyl en C₁-C₁₀)silyle, (aryl en C₆-C₁₀)di(alkyl en C₁-C₁₀)silyle, (alkyl en C₁-C₁₀)-di(aryl en C₆-C₁₀)silyle ou tri(aryl en C₆-C₁₀)silyle,
R⁴ et R⁵ sont identiques ou différents et représentent chacun un groupe vinyle, un groupe (aryl en C₆-C₁₈)-vinyle, un groupe (alkyl en C₁-C₈)vinyle ou un groupe vinylaryle en C₆-C₁₈), qui tous peuvent être substitués,
R⁶ et R⁷ sont identiques ou différents et représentent chacun un résidu cyclopentadiényle, indényle ou fluorényle, les cycles mentionnés pouvant aussi former une structure sandwich avec M¹,
R⁸ et R⁹ sont identiques ou différents, sont des substituants de R⁶ et R⁷ et possèdent les significations données pour R³, R⁴ et R⁵, à la condition que R⁶ et R⁷ puissent être une ou plusieurs fois substitués par R⁸ ou R⁹, mais qu'au moins un noyau R⁶ ou R⁷ porte au moins un radical R⁸ ou R⁹ ayant les significations de R⁴ et R⁵,
R¹⁰ a les significations représentées par les formules III-VII : 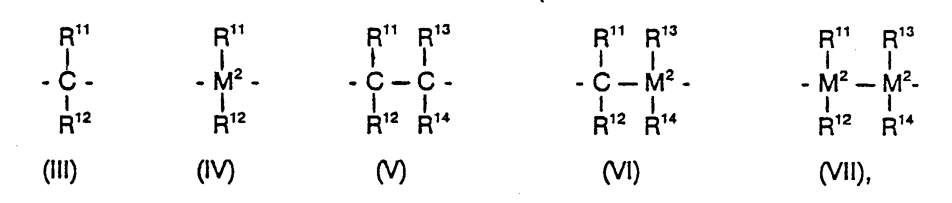 où :
M² est le silicium, le germanium ou l'étain, et
R¹¹, R¹², R¹³ et R¹⁴ sont identiques ou différents et représentent chacun un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe aryloxy en C₆-C₁₀ ou un groupe arylalkyle en C₇-C₂₀, R¹¹ et R¹², R¹³ et R¹⁴, R¹¹ et R¹³ ou R¹² et R¹⁴ pouvant former avec les atomes qui les relient un sys-tème cyclique, et
m et n sont identiques ou différents et représentent chacun un nombre de 0 à 5, à la condition que m + n soit ≥ 1,
et on copolymérise un composé de formule I et/ou de formule II avec un composé (di)vinylaromatique.

2. Procédé selon la revendication 1, caractérisé en ce que, dans les formules I et II,
R¹ et R² sont identiques ou différents et représentent chacun un atome d'hydrogène, un atome d'halogène, un groupe alkyle en C₁-C₄, un groupe alcoxy en C₁-C₄, un groupe arylalkyle en C₇-C₁₄, un groupe aryle en C₆-C₁₀, ou un groupe aryloxy en C₆-C₁₀,
R¹ et R² pouvant aussi être reliés l'un à l'autre et pouvant former avec M¹ un radical métallocyclique,
les radicaux R³ sont identiques ou différents et représentent chacun un atome d'hydrogène, un atome d'halogène, un groupe alkyle en C₁-C₄, un groupe aryle en C₆-C₁₀, un groupe arylalkyle en C₇-C₁₄, un groupe fluoralkyle en C₁-C₆ ou un résidu organométallique tel qu'un groupe tri(alkyl en C₁-C₁₀)silyle, (aryl en C₆-C₁₀)di(alkyl en C₁-C₆)silyle, (alkyl en C₁-C₄)-di(aryl en C₆-C₁₀)silyle ou tri(aryl en C₆-C₁₀)-silyle,
R⁴ et R⁵ sont identiques ou différents, de préférence identiques, et représentent chacun un groupe vinyle, un groupe (aryl en C₆-C₁₈)vinyle, un groupe (alkyl en C₁-C₈)vinyle, ou un groupe vinylaryle en C₆-C₁₈ qui peuvent être substitués par un groupe alcoxy en C₁-C₄, un groupe alkyle en C₁-C₄ ou un groupe OH,
R⁶ et R⁷ sont identiques ou différents et représentent chacun un résidu cyclopentadiényle, indényle ou fluorényle, les cycles mentionnés pouvant former avec M¹ un structure sandwich,
R⁸ et R⁹ sont identiques ou différents,
sont des substituants de R⁶ et R² et possèdent les significations données pour R³, R⁴ et R⁵, à la condition que R⁶ et R⁷ puissent être une ou plusieurs fois substitués par R⁸ ou R⁹, mais qu'au moins un cycle R⁶ ou R⁷ porte au moins un radical R⁸ ou R⁹ ayant la signification de R⁴ et R⁵,
R¹⁰ a les significations représentées dans les formules III et VII, où M² est le silicium ou le germanium et R¹¹, R¹², R¹³ et R¹⁴ sont identiques ou différents et représentent chacun un atome d'hydrogène, un atome d'halogène, un groupe alkyle en C₁-C₆, un groupe fluoralkyle en C₁-C₆, un groupe aryle en C₆-C₁₀, un groupe fluoraryle en C₆-C₁₀, un groupe alcoxy en C₁-C₆, un groupe aryloxy en C₆-C₁₀ ou un groupe arylalkyle en C₇-C₁₄,
R¹¹ et R¹², R¹³ et R¹⁴, R¹¹ et R¹³ ou R¹² et R¹⁴ pouvant former, avec les atomes qui les relient, un système cyclique, et
m et n sont identiques ou différents et représentent chacun un nombre de 0 à 5, m + n devant ≥ 1.

3. Procédé selon la revendication 1 ou 2, caractérisé en ce que, dans les formules I et II :
R¹ et R² sont identiques ou différents et représentent chacun un atome d'hydrogène, un atome d'halogène, un groupe alkyle en C₁-C₄, ou un groupe aryle en C₆-C₁₀, R¹ et R² pouvant aussi être reliés l'un à l'autre et pouvant former avec M¹ un radical métallocyclique,
les radicaux R³ sont identiques ou différents et représentent chacun un atome d'hydrogène, un atome d'halogène, un groupe alkyle en C₁-C₄, un groupe aryle en C₆-C₁₀, ou un résidu organométallique tel qu'un groupe tri(alkyl en C₁-C₁₀)silyle,
R⁶ et R⁷ représentent chacun un résidu cyclopentadiényle, et
R¹⁰ a les significations représentées dans les formules III à V, où M² est le silicium et R¹¹, R¹², R¹³ et R¹⁴ sont identiques ou différents et représentent chacun un atome d'hydrogène, un atome d'halogène, un groupe alkyle en C₁-C₆, ou un groupe aryle en C₆-C₁₀,
R¹¹ et R¹², R¹³ et R¹⁴, R¹¹ et R¹³ ou R¹² et R¹⁴ pouvant former, avec les atomes qui les relient, un système cyclique.

4. Procédé selon une ou plusieurs des revendications 1 à 3, caractérisé en ce que la polymérisation est déclenchée par voie thermique ou par un amorceur radicalaire.

5. Procédé selon l'une ou plusieurs des revendications 1 à 4, caractérisé en ce que la polymérisation est déclenchée par un amorceur radicalaire.

6. Procédé selon la revendication 5, caractérisé en ce que, pour ce qui est de l'amorceur radicalaire, il s'agit d'α,α'-azoisobutyronitrile.

7. Constituants de catalyseurs immobiles à base d'un métallocène, pouvant être préparés par le procédé selon une ou plusieurs des revendications 1 à 6.

8. Utilisation d'un constituant de catalyseur immobile à base d'un métallocène selon la revendication 7, en tant que catalyseur dans de la polymérisation d'oléfines.

9. Métallocène de formule I : 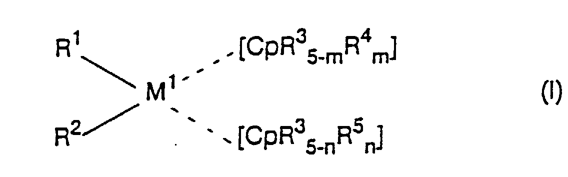 et/ou de formule II : 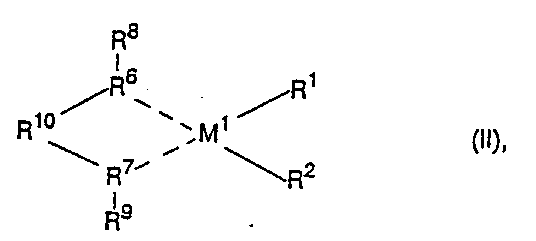 dans lesquelles :
M¹ est le zirconium ou le hafnium, et
Cp désigne un résidu cyclopentadiényle,
R¹ et R² sont identiques ou différents et représentent chacun un atome d'hydrogène, un atome d'halogène, un groupe alkyle en C₁-C₁₀, un groupe alcoxy en C₁-C₁₀, un groupe arylalkyle en C₇-C₂₀, un groupe aryle en C₆-C₁₀ ou un groupe aryloxy en C₆-C₁₀,
R¹ et R² pouvant aussi être reliés l'un à l'autre et pouvant former avec M¹ un radical métallocyclique,
les radicaux R³ sont identiques ou différents et représentent chacun un atome d'hydrogène, un atome d'halogène, un groupe alkyle en C₁-C₁₀, un groupe aryle en C₆-C₁₀, un groupe arylalkyle en C₇-C₂₀, un groupe fluoralkyle en C₁-C₁₀, ou un résidu organométallique tel qu'un groupe tri(alkyl en C₁-C₁₀)silyle, (aryl en C₆-C₁₀)di(alkyl en C₁-C₁₀)-silyle, (alkyl en C₁-C₁₀)-di(aryl en C₆-C₁₀)silyle ou tri(aryl en C₁-C₁₀)silyle,
R⁴ et R⁵ sont identiques ou différents et représentent chacun un groupe vinyle, un groupe (alkyl en C₁-C₈)-vinyle ou un groupe vinylaryle en C₆-C₁₈, qui tous peuvent être substitués,
R⁶ et R⁷ sont identiques ou différents et représentent chacun un résidu cyclopentadiényle, indényle ou fluorényle, les cycles mentionnés pouvant aussi former une structure sandwich avec M¹,
R⁸ et R⁹ sont identiques ou différents, sont des substituants de R⁶ et R⁷ et possèdent les significations données pour R³, R⁴ et R⁵, à la condition que R⁶ et R⁷ puissent être une ou plusieurs fois substitués par R⁸ ou R⁹, mais qu'au moins un noyau R⁶ ou R⁷ porte au moins un radical R⁸ ou R⁹ ayant les significations de R⁴ et R⁵,
R¹⁰ a les significations représentées par les formules III-VII : 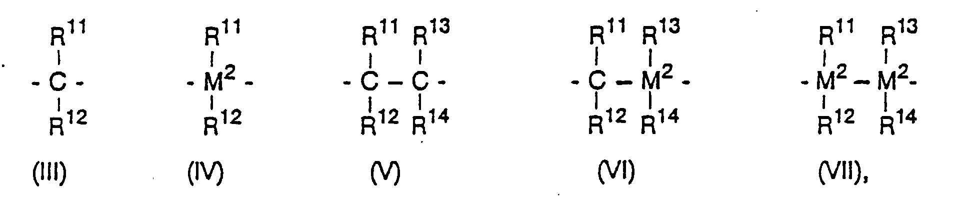 où :
M² est le silicium, le germanium ou l'étain, et
R¹¹, R¹², R¹³ et R¹⁴ sont identiques ou différents et représentent chacun un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe aryloxy en C₆-C₁₀, ou un groupe arylalkyle en C₇-C₂₀,
R¹¹ et R¹², R¹³ et R¹⁴, R¹¹ et R¹³ ou R¹² et R¹⁴ pouvant former, avec les atomes qui les relient, un système cyclique, et
m et n sont identiques ou différents et représentent chacun un nombre de 0 à 5, à la condition que m + n soit ≥ 1.
